# EUROPEAN PATENT SPECIFICATION

(11) **EP 0 510 454 B1**
(45) Date of publication and mention of the grant of the patent: **10.11.1999**
(21) Application number: 92106170.1
(22) Date of filing: 09.04.1992
(51) Int. Cl.: G06F 1/16, G06F 1/26

(54) **Data processor with interface and power supply for portable terminal**
Datenverarbeitungssystem mit Schnittstelle und Stromversorgung für tragbare Dataterminal
Processeur de données avec interface et alimentation pour un terminal portatif de données

(30) Priority: 25.04.1991 JP 9520591; 23.05.1991 JP 11835491
(43) Date of publication of application: 28.10.1992
(73) Proprietor: SHARP KABUSHIKI KAISHA, Osaka-shi, Osaka-fu 545-0013 (JP)
(72) Inventor: Tanide, Yoichi, Nara-shi, Nara-ken (JP); Mahara, Koji, Kumamoto-shi, Kumamoto-ken (JP)
(74) Representative: Müller, Frithjof E., Dipl.-Ing.

(56) References cited:
- DE-A- 3 943 311
- FR-A- 2 601 161
- FR-A- 2 601 161
- US-A- 4 143 417
- PATENT ABSTRACTS OF JAPAN vol. 8, no. 271 (P-320)(1708) 12 December 1984
- PATENT ABSTRACTS OF JAPAN vol. 7, no. 172 (P-213)(1317) 29 July 1983

## Description

### BACKGROUND OF THE INVENTION

### 1. Field of the Invention:

The present invention relates generally to an information processor in which information is gathered on the spot of shops, store rooms, etc. using a portable remote terminal, such as a hand terminal, and the information is processed by a main processor such as a host computer. More particularly, the present invention relates to an information processor having a portable remote terminal used in conjunction with an optical interface box. In addition, the present invention relates to an automatic power-on system for a portable remote terminal whereby the power source of the portable remote terminal can be turned on by means of the optical interface box in a non-contact manner utilizing electromagnetic induction.

### 2. Description of the Prior Art:

In a conventional information processor such as a point of sale information management system (hereinafter, referred to as "a POS"), information processing such as inventory management of articles is performed by a host computer, such as an office computer included in a main computer, which is used in conjunction with one or more portable remote terminals such as hand terminals. The hand terminals can operate separately from and independently of the host computer and can be carried to a shop, a store room, or the place of trade for information gathering. The information accumulated by the hand terminals is transmitted, via an interface means for information interchange, to the host computer in which various kinds of processing are performed on the information.

The hand terminal operates in accordance with a program code stored in a memory included in the hand terminal. The program code can be updated by the host computer via the interface means. Thus, the operation of hand terminal can be changed in accordance with the program code transmitted from the host computer, so that the hand terminal can provide flexible operation depending on the required information processing. Moreover, a program can advantageously be generated by the host computer which offers a good program developing environment.

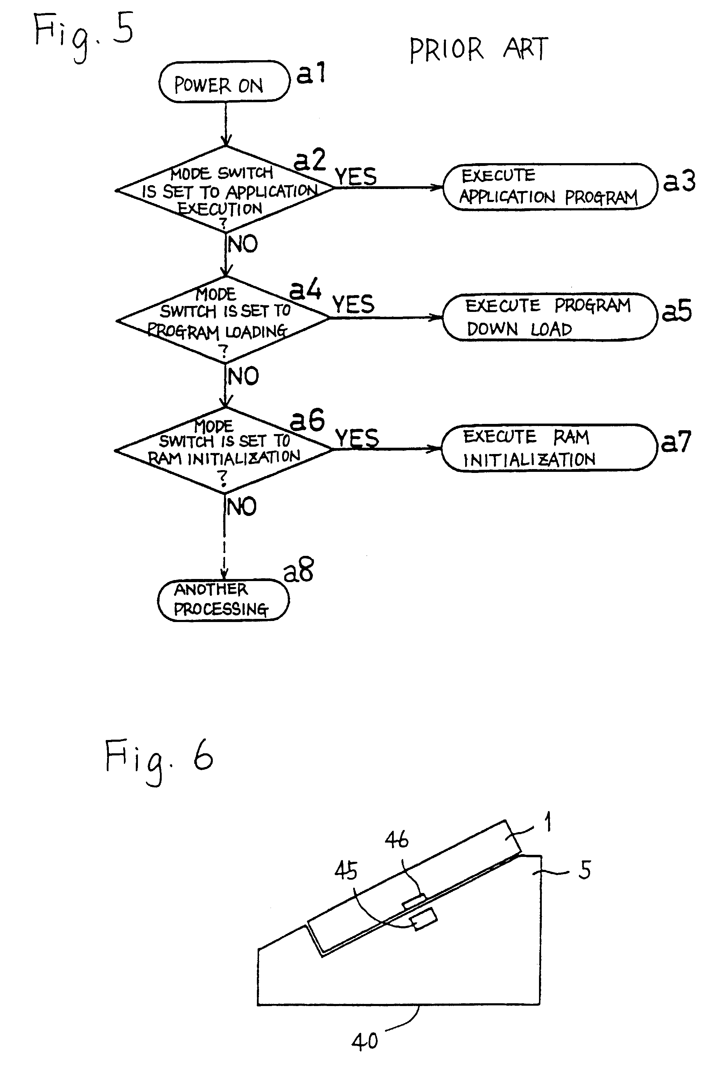

A conventional hand terminal includes a central processing unit (CPU), a rewritable memory (for example, a random access memory (RAM)), and the like, and is provided with a mode switch for switching operation modes. Figure **5** is a flow chart illustrating the system operation of the hand terminal in which the modes are switched by such a mode switch.

In step a1, the mode switch is initially set to a desired operation mode, and the power switch is then turned on. In step **a2**, it is judged whether or not the mode switch is set to select "execution of application program". If YES, the process proceeds to step **a3** in which an application program, such as a program for information gathering, is executed in accordance with the program code stored in the RAM. In step **a4**, it is judged whether or not the mode switch is set to select "program loading". If YES, the process proceeds to step **a5** in which a program code is transmitted from the host computer via the interface means and is stored in the RAM, i.e., a program code is down-loaded. In step **a6**, it is judged whether or not the mode switch is set to select "RAM initialization". If YES, the process proceeds to step **a7** in which the RAM initialization is executed, such as clearing the contents stored in the RAM. If the mode switch is set to select another processing, the process proceeds to step **a8** in which the selected processing is performed.

Accordingly, in the conventional hand terminal, when a program is down-loaded, it is necessary first to set the mode switch to "program loading". Even further, it is necessary initially to connect the hand terminal to the interface means with the host computer, and then to turn on the power switch. Moreover, it is required to down-load a program, not only when a program is newly generated for information processing, but also when a program currently used is improved by partly modifying for version upgrades. In the improvement for version upgrade, the mode switch must be directly operated by a person such as a customer engineer or a user. He or she may forget the switch operation or make an operation mistake, which results in an operation failure in information processing.

For example, after a program is improved for version upgrade in order to overcome an operation failure of the hand terminal, if the improved program is not down-loaded to the hand terminal, the operation failure cannot be eliminated. In another case, even if data such as codes for articles are changed, the hand terminal transmits previous data to the host computer. As a result, the host computer will operate based on the erroneous information.

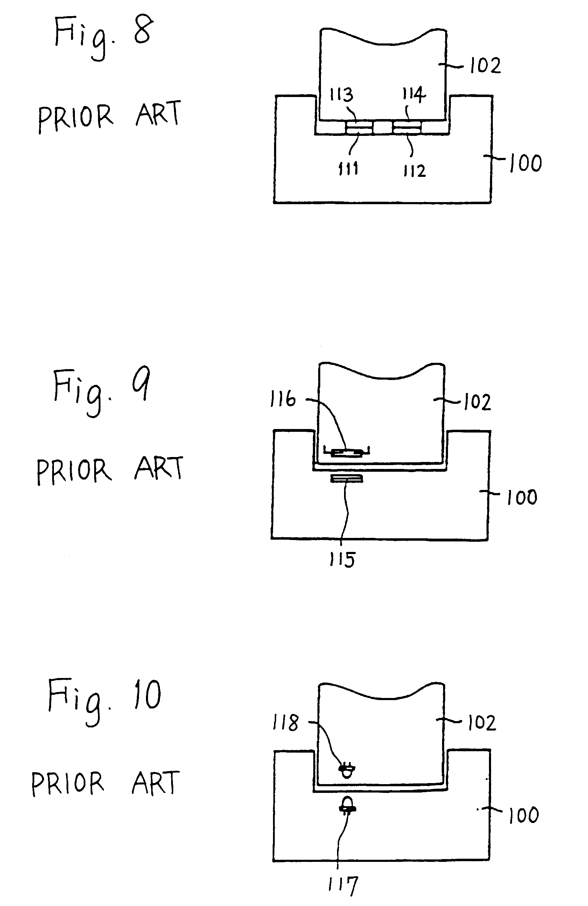

The interface means for transmitting information between the hand terminal and the host computer includes an interface box. Typically, there are two methods of turning on the power source of the hand terminal which is in a power off state. One is a contact method in which the interface box and the hand terminal are connected by a contact. The other is a non-contact method in which the interface box and the hand terminal are connected utilizing magnetic force or light, and without an electrical contact. These methods are illustrated, respectively, in Figures **8** to **10**.

As is shown in Figure **8**, an internal circuit of an interface box **100** and an internal circuit of a hand terminal **102** are connected by metal contacts **111**, **112**, **113** and **114**, which are externally exposed. Such a contact method has a problem in reliability because influences by oxidization of the contacts and the adhesion of insulating materials such as dirt cannot be avoided. In view of this problem, the non-contact method is superior in reliability. Figure **9** shows a non-contact method utilizing magnetic force in which an electromagnet **115** as a source of magnetic force and a magnetic sensitive type lead switch **116** are used. However, this non-contact method has a durability problem in that the hand terminal generally has a mechanical contact such as the lead switch, such a mechanical contact having a limited operating life.

Figure 10 shows another non-contact method utilizing light in which a light emitting element 117 and a light receiving element 118 are used. This non-contact method has a problem with operation precision because the optical connection is easily affected by external light. Moreover, this method necessitates that there be a power supply to the light detection circuit, so that, when the hand terminal is left in an otherwise off state, the battery still is rapidly exhausted. As a result, there exist some practical disadvantages such as the battery must often be charged.

Prior art document DE A1 3 943 311 discloses a portable data input apparatus comprising input means for inputting graphic data and binary data, means for converting input graphic data into a digital signal of picture elements, and binary data into a code signal, control means for processing an output signal of the converting means, and memory means for storing respective data as processed by the control means.

Prior art document FR A1 2 601 161 discloses an information processor having a main processor and a portable device which are connected to each other by optocouplers, and magnetic coils for transferring energy.

Further, prior art document US 4,143,417 describes a portable data-gathering apparatus wherein a service module may receive data from a remote terminal, and the received data may be accessed and displayed through a control module.

Prior art document PATENT ABSTRACTS OF JAPAN, vol. 8, no. 271 (P-320)(1708), December 12, 1984; & JP-A-59,139,440 (Hitachi Seisakusho K. K.), August 10, 1984, describes an electronic computer system in which a central electronic computer receives an operation stop request when the use of a terminal device is terminated, and an electric power source of the terminal device is automatically turned off.

Finally, prior art document PATENT ABSTRACTS OF JAPAN, vol. 7, no. 172 (P-213)(1317), July 29, 1983; & JP-A-58,078,217 (Nippon Denki K. K.), May 11, 1983, discloses a remote power source controlling system which performs a remote power source control of a slave computer in respect to hardware by providing a system power source controller on the side of a master computer, and providing a pair of digital multiplexing devices and a radio transmitting and receiving device between the master and slave computers.

### SUMMARY OF THE INVENTION

It is an object of the present invention to provide an information processor which overcomes the above-discussed and numerous other disadvantages and deficiencies of the prior art. To solve this object the present invention provides an information processor as specified in claim 1.

Preferred embodiments of the invention are especially described in the subclaims.

The information processor of the present invention includes especially a main processor and a portable remote terminal which can operate separately for information processing and which can mutually exchange information with the main processor, the main processor and the portable remote terminal including optical interface means for information interchange, the portable remote terminal including: a power switch which can be turned on manually and also by means of the main processor, and a memory in which program codes for information processing are stored; and the main processor including: detection means for detecting the state of the power switch of the portable remote terminal in a situation where information interchange can be performed via the optical interface means, and control means for turning on the power switch when the output from the detection means indicates that said power switch of the portable remote terminal is off and for transferring program codes to the portable remote terminal via the optical interface means to store them into said memory.

According to an embodiment of the invention, an information processor comprises a main processor and a portable remote terminal which can operate separately for information processing and which can mutually exchange information with said main processor, said main processor and said portable remote terminal comprising optical interface means for information interchange, said portable remote terminal comprising: a power switch which can be turned on manually and by means of said main processor in order to supply power to said portable remote terminal; said main processor comprising: detection means for detecting the state of said power switch of said portable remote terminal in a situation where information interchange can be performed via said optical interface means; and control means for turning on said power switch when the output from said detection means indicates that said power switch of said portable remote terminal is off.

According to an other embodiment of the present invention, in the information processor, the main processor and the portable remote terminal can separately perform information processing, and can mutually exchange information. For information interchange, the main processor and the portable remote terminal comprise optical interface means. The portable remote terminal comprises a power switch and a memory. The power switch can be turned on by the main processor. The memory stores a program code for information processing. The main processor comprises detection means and control means. The detection means detects the state of the power switch of the portable remote terminal in the situation where information can be interchanged via the optical interface means. The control means operates so as to turn on the power switch of the portable remote terminal in response to the output of the detection means which indicates that the power switch is off, and so as to transfer a program code to the portable remote terminal via the optical interface means and store it into the memory.

Therefore, even in the state where the power switch of the portable remote terminal is off, if the portable remote terminal is set in the situation where information can be interchanged with the main processor via the optical interface means, a program code from the main processor is stored into the memory, i.e., a program is down-loaded.

In an embodiment, an automatic power-on system for a portable remote terminal includes a primary coil for generating a magnetic force in a conductive state, the primary coil being buried at a prescribed position in a casing of an optical interface box which performs data transmission with the portable remote terminal which is located in a prescribed position; switching means which intermittently makes the primary coil conductive, the switching means being provided in the optical interface box; a secondary coil capable of being electromagnetically coupled with the primary coil, the secondary coil being buried at a position facing the primary coil in the bottom of a casing of the portable remote terminal; a rectifier circuit for rectifying induction electromotive force inducted by the secondary coil to be DC voltage, the rectifier circuit being provided in the portable data terminal; and control means for supplying power to the portable remote terminal in response to the output voltage of the rectifier circuit, the control means being provided in the portable data terminal.

One of the switching means and the control means operates only when the power switch of the portable remote terminal is in an off state.

In an embodiment, a portable remote terminal comprises means for supplying power within said portable remote terminal in response to a control signal received from an optical interface box with which said portable remote terminal can optically engage in an information interchange, wherein said means for supplying comprises a coil and said control signal comprises a magnetic field for inducing an electromotive force in said coil.

It will be appreciated based on the description herein that when the hand terminal is mounted on the optical interface box in a predetermined position, and the power switch is off so as to prevent the exhaustion of the contained battery, the data exchange cannot be performed therebetween. In this case, it is required to turn on the power source of the hand terminal by way of the optical interface box included in an electronic computer.

When the switching means is repeatedly turned on and off by means of a CPU so as to make a primary coil conductive, a current intermittently flows through the primary coil. As a result, an alternating magnetic field occurs.

At a secondary coil which is electromagnetically coupled with the primary coil, an induction electromotive force is generated due to electromagnetic induction.

The generated voltage is rectified by a rectifier circuit. The rectified DC current activates the control means so as to perform an on operation in which the power from the battery is supplied to the hand terminal. The on operation is maintained after the generated voltage in the coil disappears and thus the power-on state in which data can be exchanged is maintained. When the data exchange is completed as time elapses and the power-on state is not required, the power source must be turned off. There are two ways for turning off the power source. One is a way in which the power source is forcedly turned off under the control of the program in the hand terminal. The other is a way in which, after the voltage generated by repeating the initial operation of the switching means is taken as a signal, the power source is turned off under the control of the program in the hand terminal.

The primary and secondary coils are provided adjacently to each other, so that they are hardly affected by electromagnetic interference from other magnetic sources. As a result, the reliability in signal transmission is extremely high.

Thus, the invention described herein makes possible the objective of providing an information processor in which a program such as an application program can be down-loaded from a main processor such as a host computer to a portable remote terminal such as a hand terminal, without operating a mode switch or the like of the hand terminal. Furthermore, the invention described herein makes possible the objective of providing an automatic power-on system for a portable remote terminal in which the power source of the portable data terminal can be turned on in a non-contact manner. In the power-on system, it is unnecessary to provide mechanical contacts on the optical interface box and the portable remote terminal. Accordingly, the power-on system is not affected easily by external noises, whereby the reliability can be enhanced and the power consumption can be reduced.

### BRIEF DESCRIPTION OF THE DRAWINGS

This invention may be better understood and its numerous objects and advantages will become apparent to those skilled in the art by reference to the accompanying drawings as follows:
Figure **1** is a block diagram of an information processor in accordance with the present invention.
Figure **2** is a perspective view showing the hand terminal and optical interface box of the information processor of Figure **1**, as the hand terminal is about to be mounted on the optical interface box in accordance with the present invention.
Figure **3A** is a side view showing the hand terminal as it is about to be mounted on the optical interface box in accordance with the present invention.
Figure **3B** is a side view showing the hand terminal mounted on the optical interface box in accordance with the present invention.
Figure **4** is a flow chart illustrating the operation of the information processor according to one embodiment of the present invention.
Figure **5** is a flow chart illustrating the operation of a conventional information processor.
Figure **6** is a side view showing the respective portions of primary and secondary coils in the hand terminal and optical interface box in the set state according to one embodiment of the present invention.
Figure **7** is an internal electric circuit diagram in accordance with of the present invention.
Figure **8** is a partial plan view showing an interface box and a hand terminal as an example of the prior art.
Figure **9** is a partial plan view showing another example of the prior art.
Figure **10** is a partial plan view showing still another example of the prior art.

### DESCRIPTION OF THE PREFERRED EMBODIMENTS

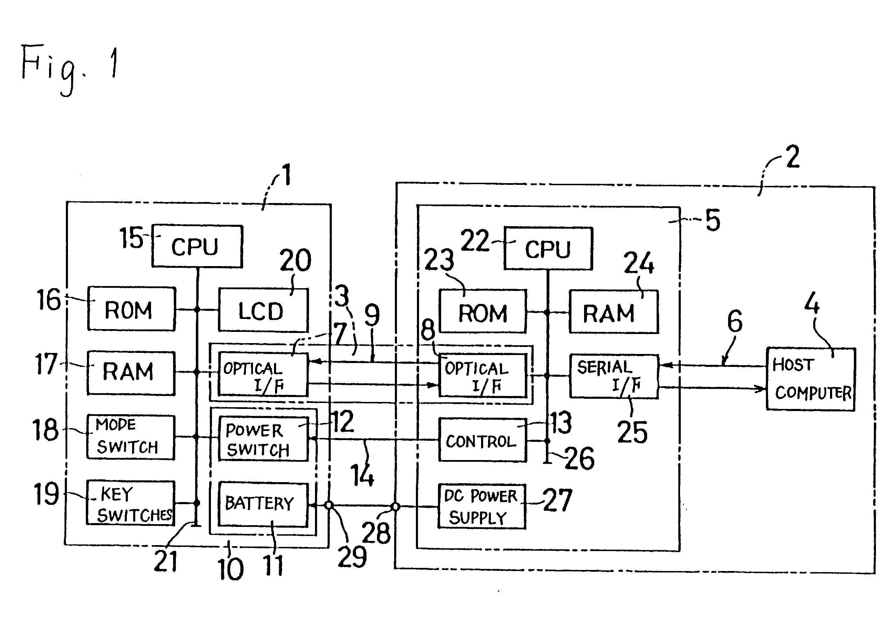

Figure **1** is a block diagram showing an electrical configuration for an information processor in one embodiment of the invention. A hand terminal **1**, as a portable remote terminal, and a main processor **2** can mutually exchange information via optical interface means **3**. The main processor **2** comprises a host computer **4**, such as an office computer, and an optical interface box **5**. Transmission lines **6**, such as RS-232C cable, connect the host computer **4** with the optical interface box **5** so that information can be transmitted bidirectionally. The optical interface means **3** includes optical interface ports **7** and **8**, hereinafter, abbreviated as "optical I/Fs", respectively provided in the hand terminal **1** and the main processor **2**. The optical interface means **3** further includes an optical path **9** linking the optical I/Fs **7** and **8**. The power for the operation of the hand terminal **1** is applied from power supply source **10**. The power source **10** includes a rechargeable battery **11** and a power switch **12**. The power switch **12** can be operated by means of the hand terminal **1** itself and also can be turned on by way of a control circuit **13** which is provided in the optical interface box **5** through a control line **14**.

The hand terminal **1** comprises a CPU **15**, so that the hand terminal **1** can operate independent from the main processor **2**. The CPU **15** operates in accordance with program codes respectively stored in a read only memory (ROM) **16** and a RAM **17**. The ROM **16** stores basic programs necessary for information interchange via the optical interface means **3**, initialization of the RAM **17**, and the like. The RAM **17** stores system programs or application programs to be down-loaded from the host computer **4** via the optical interface means **3**. The RAM **17** also is used as a memory work area for the operation of the CPU **15**. The operation modes of the hand terminal **1** can be switched over by operating a mode switch **18**. In order to input information into the hand terminal **1**, input means such as key switches **19** is provided. Display means such as a liquid crystal display (LCD) **20** is provided so as to display the input information. The various components of the hand terminal **1** are connected to one another through a bus line **21**.

A CPU **22**, a ROM **23**, a RAM **24**, and a serial interface port (hereinafter, abbreviated as "a serial I/F") **25** are provided in the optical interface box **5**, and are connected to one another through a bus line **26**. The CPU **22** can turn on the power switch **12** of the hand terminal **1** via the control circuit **13**. A direct current power supply **27** is provided in the optical interface box **5**. The DC power supply **27** can supply power for charging the battery **11** through a supplying terminal **28** of the optical interface box **5** and a charging terminal **29** of the hand terminal **1** in the situation where the optical interface box **5** and the hand terminal **1** can interchange information via the optical interface means **3**.

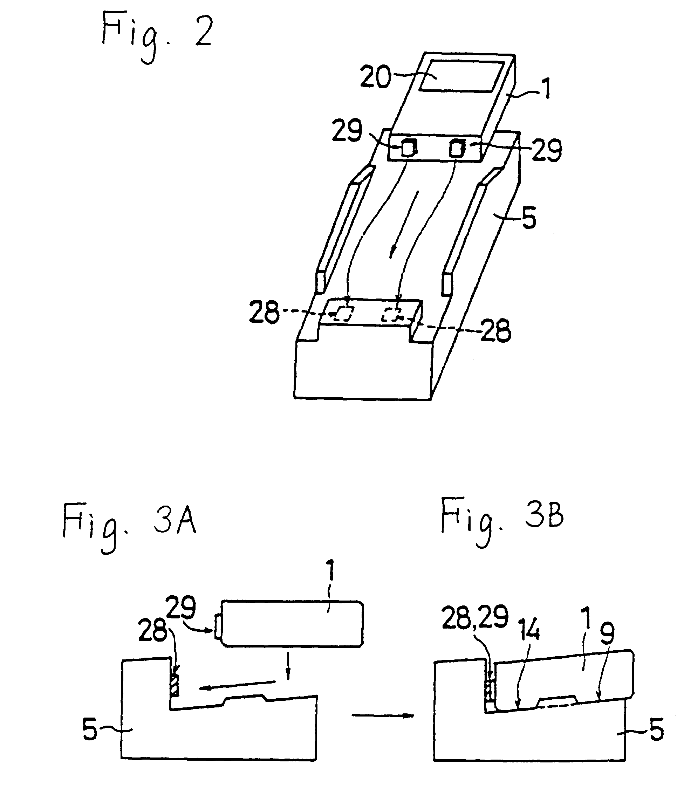

The hand terminal **1** and the optical interface box **5** can be positioned such that information can be mutually exchanged via the optical interface means **3** as is shown in Figures **2** and **3**. Figure **2** is a perspective view showing the situation as the hand terminal **1** is about to be mounted on the optical interface box **5**. Figure **3A** is a side view showing the situation immediately before the hand terminal **1** is mounted on the optical interface box **5**. Figure **3B** is a side view showing the respective portions after the hand terminal is mounted on the optical interface box **5**. Referring to the particular embodiment shown in these figures, when the hand terminal **1** is mounted on the optical interface box **5**, the supplying terminal **28** comes into contact with the charging terminal **29**. In the mounted state, as is shown in Figure **3B**, the hand terminal **1** and the optical interface box **5** can mutually exchange information through the optical path **9**, so that the power switch **12** of the hand terminal **1** can be turned on by means of the optical interface box **5**.

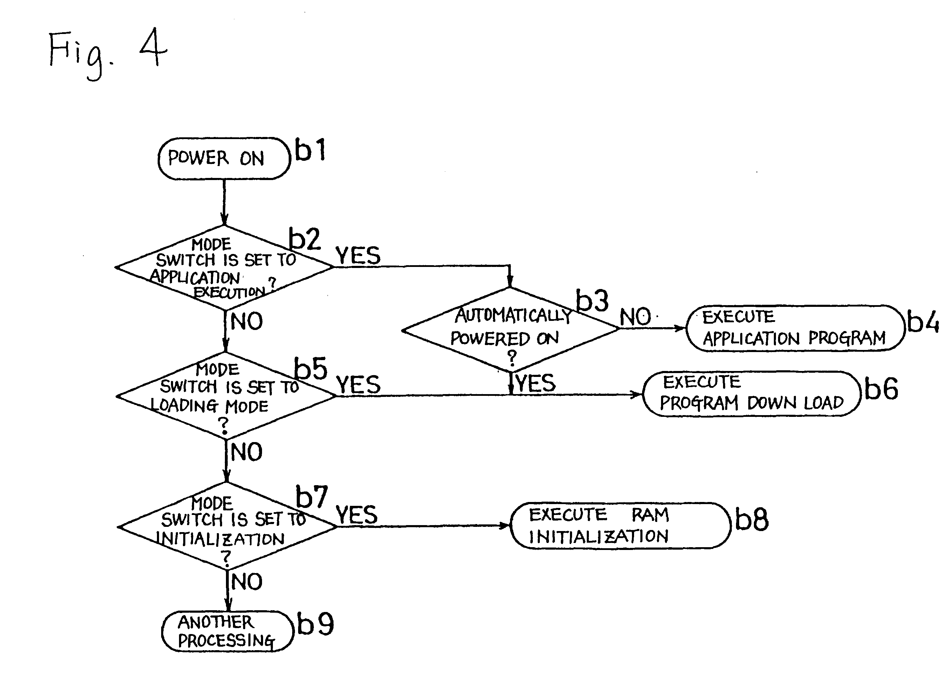

Figure **4** is a flow chart illustrating the operation of the hand terminal **1** according to one embodiment of the present invention. In step **b1**, the power source **10** is turned on by throwing the power switch **12**. In step **b2**, it is judged whether or not the mode switch **18** is set to select "execution of application". If YES, the process advances to step **b3** in which it is judged whether or not the power source **10** is automatically turned on. In other words, it is judged whether or not the power switch **12** is turned on by means of the optical interface box **5**. If the power source **10** is not turned on automatically, but instead by physically throwing the power switch **12** of the hand terminal **1**, the process proceeds to step **b4** in which the application program is executed. If it is judged that the power source **10** is automatically turned on at step **b3**, or if it is judged that the mode switch is set to select "loading mode" at step **b5**, the process advances to step **b6** in which a program is down-loaded. When the mode switch is set to select "RAM initialization", the process proceeds from step **b7** to step **b8** in which the RAM initialization is executed. When the mode switch **18** is set to select another processing, the process proceeds to step **b9** in which the selected processing is performed.

In this embodiment, the hand terminal **1** is mounted on the optical interface box **5**, so that the optical path **9** for information interchange is short. Therefore, even if the optical output from the optical I/Fs **7** and **8** is weak, i.e., of low intensity, the output is hardly affected by an external noise or the like. As a result, the amount of power consumption within the hand terminal **1** can be reduced. It is necessary that the hand terminal **1**, according to the embodiment shown in Figure **1**, electrically comes into contact with the optical interface box **5** by the control line **14** and by the supplying terminal **28** and the charging terminal **29**, but information of a large amount of signals are not mutually exchanged through these contacts. Therefore, the contacts can readily be achieved. It is understood that the control line **14** may alternatively be realized with wireless techniques such as by utilizing light or electromagnetic induction.

The state of the power switch **12** of the hand terminal **1** is judged by using the optical interface means **3**. If the power switch **12** is on, the optical I/F **8** receives the light from the optical I/F **7**. If the power switch **12** is off, the optical I/F **8** does not receive the light from the optical I/F **7**. When the optical I/F **8** does not receive the light from the optical I/F **7**, the CPU **22** turns on the power switch **12** by means of the control circuit **13**. Next, the CPU **22** transmits program codes of application programs or system programs for the hand terminal **1** from the optical I/F **8** to the optical I/F **7**. The program codes are previously fed from the host computer **4** to the optical interface box **5** and stored in the RAM **24**.

The application program for the hand terminal **1** is supplied from the host computer **4**, so that, when a plurality of hand terminals **1** are to be used, it is not necessary to generate one application program for every hand terminal **1**, but only to generate one application program. Furthermore, it is not necessary to provide means for generating a program in the hand terminal **1**, so that the hand terminal **1** can readily be simplified and made smaller. Since programs such as application programs are generated in the host computer **4** which provides a good developing environment, application programs can be readily generated.

The power switch **12** of the hand terminal **1** has a power down function for saving the power consumption when the hand terminal **1** is not used, and for preventing the exhaustion of the battery **11**. More specifically, when the hand terminal **1** is not used for a predetermined period of time, e.g., 10 minutes or some other preselected period, the power source **10** is turned off. In this state, the power supply voltage is still applied to the RAM **17** for backup. Since the battery **11** of the hand terminal **1** which has such a power down function is required to be charged, the hand terminal **1** is mounted on the optical interface box **5** so as to charge the battery **11** during the night or during such time as the hand terminal **1** is not used. According to this embodiment, application programs can be down-loaded during this charging period as is desired. The operation is not a special one but a routine one, and therefore the probability of operation mistakes can be eliminated.

According to such embodiment, when programs such as application programs are to be down-loaded, the program codes generated in the host computer **4** can be down-loaded to the hand terminal **1** without operating the mode switch **18** or the like of the hand terminal **1**. Therefore, regarding the information processor currently used, the application program or the like can be improved for version up only by mounting the hand terminal **1** on the optical interface box **5.** As a result, possible problems caused by operation mistakes of mode switch **18** or the like can be prevented.

According to the invention, even in the state where the power switch **12** of the portable remote terminal is off, if the portable remote or hand terminal **1** is set in the positional relationship such that information can be interchanged with the main processor via the optical interface means, a program can be down-loaded from the main processor. Accordingly, it is unnecessary to operate a mode switch or the like, so that, even when the program code is to be improved for version up, the problems caused by operation mistakes of mode switch or the like can be prevented.

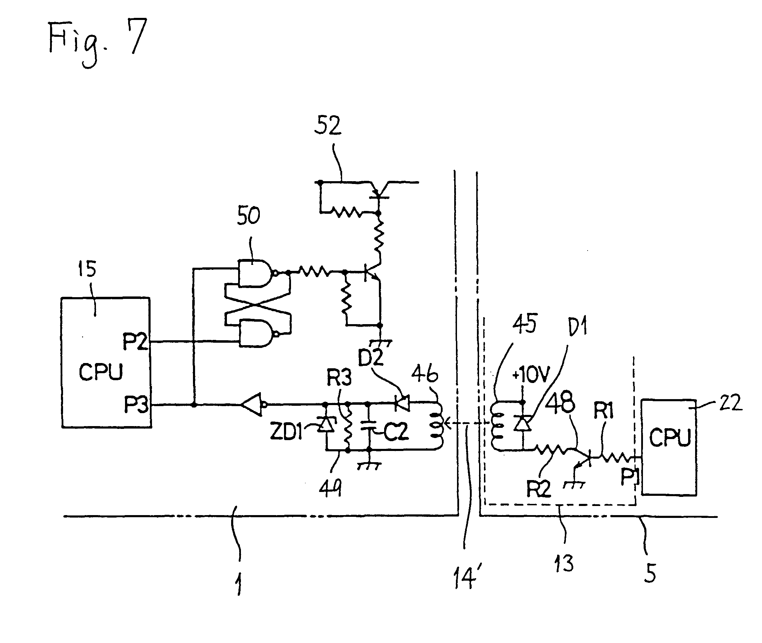

Referring now to Figures **6** and **7**, an embodiment of the present invention in which there exists non-contact turning on of the power source **10** will be described. For the most part, the embodiment shown in Figures **6** and **7** is identical to that shown in Figure **1**. Therefore, the following description relates only to those features which are different.

Figure **6** is a side view showing the set situation of the optical interface box **5** and the hand terminal **1** in another embodiment of the invention. The upper face of a casing **40** of the optical interface box **5** is a stepped slope on which the hand terminal **1** is mounted. When the hand terminal **1** is mounted as is shown in Figure **6**, signal transmission is performed by converting light into an electric signal between the optical interface box **5** and the hand terminal **1**. For the signal transmission, a light emitting element and a light receiving element are provided at appropriate positions of the facing surfaces of the optical interface box **5** and the hand terminal **1** to form an optical interface 3 as is described above with respect to the embodiment shown in Figure **1**.

In the center portion of the stepped slope of the casing **40**, a primary coil **45** which can generate a magnetic force when conductive is buried close to the surface thereof. In the portion of the bottom face of the hand terminal **1** facing the buried position of the primary coil **45** in the above-mentioned set situation, a secondary coil **46** is buried close to the surface thereof. The axes of the coils **45** and **46** have, for example, a parallel relationship, and these coils **45** and **46** are formed so as to be electromagnetically coupled via field line **14'**.

Figure **7** shows the main portions of an internal electric circuit related to the coils **45** and **46**. Switching means **48** which is realized by an NPN-type transistor is connected to a port **P1** connected to the CPU **22** in the optical interface box **5**. More specifically, the base of the transistor **48** is connected to the port **P1** through a resistor **R1** and the emitter thereof is grounded. The transistor **48** is made conductive when a "high" output is applied to the port **P1**.

One end of the primary coil **45**, which is connected to a diode **D1** in parallel and in a reverse phase sequence, is connected to a terminal of +10 V, and the other terminal is connected to the collector of the transistor **48** via a resistor **R2**.

When a high output is intermittently applied to the port **P1** connected to the CPU **22** in the optical interface box **5**, i.e., when the transistor **48** is turned on and off by repeatedly providing a high, then low, signal to the port **P1**, a current intermittently flows through the primary coil **45** and a magnetic force is generated.

In the hand terminal **1**, a diode **D2**, a capacitor **C2**, and a rectifier circuit **49** having a resistor **R3** and a zener diode **ZD1**, are connected to the secondary coil **46** as is illustrated.

The DC voltage rectified in this rectifier circuit **49** is fed as a signal for turning on the power source **10** to a flip-flop constituted by a gate circuit **50**, and the signal is held there by the flip-flop. The held signal is applied to a power source control circuit **52** constituted by transistors and resistors so as to activate the power source **10** using conventional techniques.

In response to the magnetic force generated by the optical interface box **5** via the primary coil **45**, induction electromotive force is generated in the secondary coil **46** due to electromagnetic induction. If the voltage is directly coupled to a digital circuit (not shown), there arises a problem in the resultant voltage value and the polarity. Therefore, the voltage is rectified by the diode **D2** and smoothed by the capacitor **C2** and the resistor **R3**, and is then stabilized by the zener diode **ZD1** so as to convert it into the voltage suitable for the digital circuit. Thereafter, the suitable voltage is coupled to the gate circuit **50**.

The gate circuit **50** maintains the "on" state for a predetermined period of time even if the signal transmission is stopped, after the gate circuit **50** receives a signal of the DC output voltage rectified by the rectifier circuit **49**. The gate circuit **50** is turned off by controlling a port **P2** by the CPU **15** in accordance with the program. Alternatively, the gate circuit **50** may be turned off by providing a turn-off control level signal at the DC output voltage rectified by the rectifier circuit **49**. In this case, after the presence or absence of the turn-off control level signal is checked at a port **P3** of the CPU **15**, the port **P2** is controlled in accordance with the program.

According to the invention, as described above, the power source of the hand terminal can be turned on utilizing electromagnetic induction by the primary coil and the secondary coil as a signal transmission. The signal transmission is performed in a non-contact manner between the optical interface box and the hand terminal, so that there is no mechanical contact. Therefore, the lifetime is prolonged. Moreover, the signal transmission is difficult to be externally affected optically or magnetically. Therefore, the reliability is extremely enhanced.

## Claims

1. An information processor comprising a main processor (2) and a portable remote terminal (1) which can operate separately for information processing and which can mutually exchange information with said main processor (2),
said main processor (2) and said portable remote terminal (1) comprising optical interface means (3) for information interchange, said portable remote terminal (1) comprising a memory (17) in which program codes for information processing are stored,
characterized in that
said portable remote terminal (1) further comprises a power switch (12) which can be turned on manually or by means of said main processor (2) in order to supply power to said portable remote terminal (1); and
said main processor (2) comprises:
detection means for detecting the state of said power switch (12) of said portable remote terminal (1) in a situation where information interchange can be performed via said optical interface means (3); and
control means (13) for turning on said power switch (12) when the output from said detection means indicates that said power switch (12) of said portable remote terminal (1) is off, and for transferring program codes to said portable remote terminal (1) via said optical interface means (3) to store them into said memory (17) when the output from said detection means indicates that said power switch (12) of said portable remote terminal (1) has been turned on by said control means (13).

2. The information processor of claim 1, wherein said control means comprises a hard-wired connection between said main processor (2) and said portable remote terminal (1).

3. The information processor of claim 1, wherein said control means comprises an electromagnetic connection between said main processor (2) and said portable remote terminal (1).

4. The information processor of claim 1, wherein said detection means comprises means for detecting the presence of an optical signal.

5. The information processor of claim 4, wherein said detection means further comprises a CPU.

6. The information processor of claim 1, wherein: said main processor (2) further comprises:
a primary coil (45) for generating a magnetic force in a conductive state, said primary coil (45) being buried at a prescribed position in a casing of an optical interface box (5) of the main processor; and
switching means (48) which intermittently makes said primary coil (45) conductive, said switching means (48) being provided in said optical interface box (5);
said portable remote terminal (1) further comprises:
a secondary coil (46) capable of being electromagnetically coupled with said primary coil (45), said secondary coil (46) being buried at a prescribed position in a casing of the remote terminal (1) and facing said primary coil (45); and
a rectifier circuit (49) for rectifying induction electromotive force inducted by said secondary coil (46) to provide an output DC voltage; and
wherein said control means (13) causes power to be supplied to said portable remote terminal (1) in response to the output DC voltage of said rectifier circuit (49).

7. The information processor of claim 6, wherein one of said switching means (48) and control means (13) operates only when the power switch (12) of said portable remote terminal (1) is in an off state.

8. The information processor of claim 1, wherein said portable remote terminal (1) further comprises:
means for causing power to be supplied within said portable remote terminal (1) in response to a control signal received from an optical interface box (5) with which said portable remote terminal (1) can optically engage in an information interchange, and
wherein said means for causing power to be supplied comprises a coil (46) and said control signal comprises a magnetic field for inducing an electromotive force in said coil (46).

## Patentansprüche

1. Informationsprozessor mit einem Hauptprozessor (2) und einem tragbaren Fernterminal (1), der getrennt zur Informationsverarbeitung zu arbeiten vermag und der wechselseitig Information mit dem Hauptprozessor (2) austauschen kann,
wobei der Hauptprozessor (2) und der tragbare Fernterminal (1) eine optische Schnittstelleneinrichtung (3) zum Informationsaustausch haben und der tragbare Fernterminal (1) einen Speicher (17) aufweist, in welchem Programmcodes zur Informationsverarbeitung gespeichert sind,
dadurch gekennzeichnet, daß
der tragbare Fernterminal (1) außerdem einen Leistungsschalter (12) aufweist, der von Hand oder mittels des Hauptprozessors (2) eingeschaltet werden kann, um Leistung zu dem tragbaren Fernterminal (1) zu speisen, und
der Hauptprozessor (2) aufweist:
eine Detektionseinrichtung zum Detektieren des Zustandes des Leistungsschalters (12) des tragbaren Fernterminals (1) in einer Situation, in welcher ein Informationsaustausch über die optische Schnittstelleneinrichtung (3) ausgeführt werden kann, und
eine Steuereinrichtung (13) zum Einschalten des Leistungsschalters (12), wenn der Ausgang von der Detektionseinrichtung anzeigt, daß der Leistungsschalter (12) des tragbaren Fernterminals (1) ausgeschaltet ist, und zum Übertragen von Programmcodes zu dem tragbaren Fernterminal (1) über die optische Schnittstelleneinrichtung (3), um diese in dem Speicher (17) zu speichern, wenn der Ausgang von der Detektionseinrichtung anzeigt, daß der Leistungsschalter (12) des tragbaren Fernterminals (1) durch die Steuereinrichtung (13) eingeschaltet wurde.

2. Informationsprozessor nach Anspruch 1, bei dem die Steuereinrichtung eine hartverdrahtete Verbindung zwischen dem Hauptprozessor (2) und dem tragbaren Fernterminal (1) aufweist.

3. Informationsprozessor nach Anspruch 1, bei dem die Steuereinrichtung eine elektromagnetische Verbindung zwischen dem Hauptprozessor (2) und dem tragbaren Fernterminal (1) umfaßt.

4. Informationsprozessor nach Anspruch 1, bei dem die Detektionseinrichtung eine Einrichtung zum Detektieren des Vorliegens eines optischen Signales umfaßt.

5. Informationsprozessor nach Anspruch 4, bei dem die Detektionseinrichtung außerdem eine CPU umfaßt.

6. Informationsprozessor nach Anspruch 1, bei dem der Hauptprozessor (2) außerdem aufweist:
eine Primärspule (45) zum Erzeugen einer magnetischen Kraft in einem leitenden Zustand, wobei diese Primärspule (45) in einer vorgeschriebenen Position in einem Gehäuse eines optischen Schnittstellenkastens (5) des Hauptprozessors vergraben ist, und
eine Schalteinrichtung (48), die intermittierend die Primärspule (45) leitend macht, wobei die Schalteinrichtung (48) in dem optischen Schnittstellenkasten (5) vorgesehen ist,
bei dem der tragbare Fernterminal (1) außerdem aufweist:
eine Sekundärspule (46), die in der Lage ist, elektromagnetisch mit der Primärspule (45) gekoppelt zu sein, wobei die Sekundärspule (46) in einer vorgeschriebenen Position in einem Gehäuse des Fernterminals (1) vergraben ist und der Primärspule (45) gegenüberliegt, und
eine Gleichrichterschaltung (49) zum Gleichrichten induzierter elektromotorischer Kraft, die durch die Sekundärspule (46) induziert ist, um eine Ausgangsgleichspannung zu liefern,
wobei die Steuereinrichtung (13) bewirkt, daß Leistung zu dem tragbaren Fernterminal (1) abhängig von der Ausgangsgleichspannung der Gleichrichterschaltung (49) gespeist ist.

7. Informationsprozessor nach Anspruch 6, bei dem eine Einrichtung aus der Schalteinrichtung (48) und der Steuereinrichtung (13) nur arbeitet, wenn der Leistungsschalter (12) des tragbaren Fernterminals (1) in einem Aus-Zustand ist.

8. Informationsprozessor nach Anspruch 1, bei dem der tragbare Fernterminal (1) außerdem aufweist:
eine Einrichtung, die bewirkt, daß Leistung innerhalb des tragbaren Fernterminals (1) abhängig von einem Steuersignal geliefert ist, das von dem optischen Schnittstellenkasten (5) empfangen ist, mit welchem der tragbare Fernterminal (1) optisch bei einem Informationsaustausch eingreifen kann, und
wobei die Einrichtung zum Veranlassen einer Leistungslieferung eine Spule (46) umfaßt und das Steuersignal ein Magnetfeld aufweist, um eine elektromotorische Kraft in der Spule (46) zu induzieren.

## Revendications

1. Processeur de données comprenant un processeur principal (2) et un terminal éloigné portatif (1) susceptible de fonctionner séparément pour le traitement des données et susceptible d'échanger mutuellement des données avec ledit processeur principal (2),
ledit processeur de données (2) et ledit terminal éloigné portatif (1) comprenant des moyens d'interface optique (3) pour l'échange de données, ledit terminal éloigné portatif (1) comprenant une mémoire (17) dans laquelle sont stockés des codes de programme pour le traitement des données,
caractérisé en ce que
ledit terminal éloigné portatif (1) comprend en outre un commutateur d'alimentation (12) susceptible d'être activé manuellement ou au moyen dudit processeur principal (2) afin d'alimenter en tension ledit terminal éloigné portatif (1); et
ledit processeur principal (2) comprend :
un moyen de détection destiné à détecter l'état dudit commutateur d'alimentation (12) dudit terminal éloigné portatif (1) dans une situation où l'échange de données peut être effectué par le biais dudit moyen d'interface optique (3) ;
et
un moyen de commande (13) destiné à activer ledit commutateur d'alimentation (12) lorsque la sortie dudit moyen de détection indique que ledit commutateur d'alimentation (12) dudit terminal éloigné portatif (1) est désactivé et destiné à transférer des codes de programme vers ledit terminal éloigné portatif (1) par le biais dudit moyen d'interface optique (3) pour les stocker dans ladite mémoire (17) lorsque la sortie dudit moyen de détection indique que ledit commutateur d'alimentation (12) dudit terminal éloigné portatif (1) a été activé par ledit moyen de commande (13).

2. Processeur de données selon la revendication 1, dans lequel ledit moyen de commande comprend une connexion câblée entre ledit processeur principal (2) et ledit terminal éloigné portatif (1).

3. Processeur de données selon la revendication 1, dans lequel ledit moyen de commande comprend une connexion électromagnétique entre ledit processeur principal (2) et ledit terminal portatif éloigné (1).

4. Processeur de données selon la revendication 1, dans lequel ledit moyen de détection comprend un moyen de détection de la présence d'un signal optique.

5. Processeur de données selon la revendication 4, dans lequel ledit moyen de détection comprend en outre une unité centrale de traitement.

6. Processeur de données selon la revendication 1 dans lequel :
ledit moyen processeur (2) comprend en outre :
un enroulement primaire (45) destiné à générer une force magnétique dans un état conducteur, ledit enroulement primaire (45) étant enterré dans une position prédéterminée dans un carter de boîtier d'interface optique (5) du processeur principal ; et
un moyen de commutation (48) permettant de rendre conducteur l'enroulement primaire par intermittence (45), ledit moyen de commutation (48) étant placé dans ledit boîtier d'interface optique (5);
ledit terminal éloigné portatif (1) comprend en outre :
un enroulement secondaire (46) susceptible d'un couplage électromagnétique avec ledit enroulement primaire (45), ledit enroulement secondaire (46) étant enterré dans une position prédéterminée d'un carter du terminal éloigné (1) et faisant face audit enroulement primaire (45) ; et
un circuit redresseur (49) destiné à redresser la force électromotrice d'induction induite par ledit enroulement secondaire (46) afin de produire une tension continue de sortie ; et
dans lequel ledit moyen de commande (13) entraîne l'alimentation dudit terminal portatif éloigné (1) en réponse à la tension continue de sortie dudit circuit redresseur (49).

7. Processeur de données selon la revendication 6, dans lequel l'un desdits moyen de commutation (48) et moyen de commande (13) ne fonctionne que si le commutateur d'alimentation (12) dudit terminal éloigné portatif (1) se trouve dans un état désactivé.

8. Processeur de données selon la revendication 1, dans lequel ledit terminal éloigné portatif (1) comprend en outre :
un moyen destiné à permettre l'alimentation dudit terminal éloigné portatif (1) en réponse à un signal de commande reçu par un boîtier d'interface optique (5) avec lequel ledit terminal portatif éloigné (1) peut déclencher un échange de données, et
dans lequel ledit moyen permettant l'alimentation comprend un enroulement (46) et ledit signal de commande comprend un champ magnétique destiné à induire une force électromotrice dans ledit enroulement (46).
